# EUROPEAN PATENT SPECIFICATION

(11) **EP 3 297 454 B1**
(45) Date of publication and mention of the grant of the patent: **13.05.2020**
(21) Application number: 15892701.2
(22) Date of filing: 15.06.2015
(51) Int. Cl.: A23L 7/104, B02B 1/00, A23L 33/105, A23L 33/15

(54) **COMPOSITION FOR TREATMENT OF GRAIN, PULSE AND CEREAL CROP GRAINS BEFORE PROCESSING**
ZUSAMMENSETZUNG ZUR BEHANDLUNG VON GETREIDE, HÜLSENFRÜCHTEN UND GETREIDEKÖRNERN VOR DER VERARBEITUNG
COMPOSITION DE TRAITEMENT DES GRAINS, DES LÉGUMES SECS ET DES GRAINS DE CULTURES CÉRÉALIÈRES AVANT TRANSFORMATION

(30) Priority: 19.05.2015 RU 2015118527
(43) Date of publication of application: 28.03.2018
(73) Proprietor: Petrichenko, Valeriya Vladimirovna, Moscow 141411 (RU)
(72) Inventor: PETRICHENKO, Valeriya Vladimirovna, Moscow 141411 (RU); TUMANOVA, Alla Evgen'evna, Moscow 125502 (RU)
(74) Representative: Balder IP Law, S.L.
(86) International application number: PCT/RU2015/000371
(87) International publication number: WO 2016/186532

(56) References cited:
- WO-A1-2014/195898
- CN-A- 103 564 310
- CN-A- 103 663 730
- RU-C2- 2 538 385
- RU-C2- 2 550 004
- US-A1- 2012 034 343

## Description

This invention relates to agriculture, more specifically, to processing of grain, pulse and cereal crop grains, in particular, to methods of their enzymatic treatment before processing to food products (grits, semolina, flakes, flour etc.) with the aim of increasing the output and quality of the processed and milled product.

Grain, pulse and cereal crops have grains quite differing in shape, size and structure. Basically a grain consists of two parts: the kernel (the endosperm with the germ) and the coat (glumes). The glumes covering the kernel can be either floral (as in millets, rice, oats or barley) or fruit (as in buckwheat, wheat or popcorn) or in the form of testa (as in peas).

A very important property of a grain is the strength of the bond between the glumes and the kernel. In the grains of cereals such as rice, millets, oats and buckwheat the glumes envelop the kernel without bonding to it. In wheat, peas, popcorn and barley the glumes are tightly bonded with the kernel over it whole surface.

The highest hull content is in oats (22-30%) and the lowest one is in barley and peas. It is these grain parameters that affect the output and quality of grits and flour: bran content, size, size uniformity, humidity and impurity content. Hull content is determined in grains cleaned from any impurities. The higher the hull content the lower the grits and flour output of the factory.

Grain, pulse and cereal crops have found wide use, and there are a variety of their processing methods for producing high quality food and semi-finished food.

Known is (EP No. 231729, published 12.08.1987) a method of enzymatic decomposition of whole flour to starch-containing pieces of cereals. Flour is treated with an α-amylase at 80-95°C or at 100-110°C and with β-amylase at 55-60°C. The enzymes are denatured by adding chloric acid and heating to 90-95°C.

Also known is (EP No. 731646, published 18.09.1996) a method of producing homogeneous and stable grain suspension comprising the treatment of oatmeal with β- and α-amylases.

Further known is (US Patent 4996063, published 26.02.1991) a method of producing water-soluble dietary fiber composition by treating oatmeal or oat bran with an α-amylase for decomposing oat starch.

Known is (JP Patent 3236787, published 10.12.2001) method of producing a composition of saccharides comprising treating potato starch with an α-amylase of the genus Bacillus or splitting the branched structure of the enzyme pullulanase at 50-70°within 3-50 hours. The enzyme is then inactivated, and potato starch is further treated with β-amylase at 50-70° for 3-50 hours.

Further known is (US Patent 5458893, published 17.10.1995) a method of producing a β-glucanase treated water-soluble dietary fiber composition comprising α-amylase treatment of an aqueous dispersion of a β-glucan containing grain-based substrate before β-glucanase treatment of the water-soluble fraction.

The above methods including the enzymes and enzyme combinations used therein yield a variety of starch-containing products modified with one or more enzymes which denature starch and/or glucan by any known mechanism and therefore yield a variety of products having different properties. The enzymes are combined following different treatment methods and used at different temperatures and for different durations.

However, the above methods implemented with the above enzymes do not increase the efficiency of hydrothermal grain treatment before processing and milling and thus do not allow the factory to increase its output, quality and dietary value of its products while retaining minimum operational costs.

The closest counterpart of the present technical solution can be considered (RU Patent 2538385, published 10.01.2015) a combination of enzyme preparations: cellulases (endoglucanase (1,4-β-glucan-4-glucanohydrolase, κΦ 3.2.1.4) and exoglucanases: cellobiohydrolase (1,4-β-D-glucancellobiohydrolase, κΦ 3.2.1.91) and/or exo-1,4-P-glucosidase (1,4- β -D-glucanglucohydrolase, κΦ 3.2.1.74)) and xylanases (hemicellulases (endo-1,4-β-xylanase, κΦ 3.2.1.8, and/or α-L-arabinofuranosidase, κΦ 3.2.1.55)) in an amount of 10¹ - 10⁴ enzymatic activity units, as well as dietary supplements: calcium peroxide (E930) and sodium (E281) and/or calcium (E282) and/or potassium (E283) propionates and/or sedum (E262), and/or calcium (E263) and or potassium (E261) acetates.

However, the experience of using said method has shown that the above enzyme combination is insufficiently efficient for hydrothermal grain treatment before milling.

Therefore the object of the present technical solution is to increase the output of flour or grit mills with a concurrent gain in the quality and dietary value of the milled products.

It is suggested to achieve said object by using the herein-provided composition for the treatment of grain, pulse and cereal crop grains before processing.

Said composition comprises a combination of enzyme preparations comprising
a. cellulases, selected from at least cellobiohydrolases;
b. xylanases;
c. oxidoreductases, selected from at least catalases, laccases and peroxidases;
d. esterases, selected from at least phytases; ; and
e. antioxidants, selected from the group consisting of ascorbates, tocopherols, polyphenols, natural vegetable extracts, citric acid or ascorbic acid.

Depending on the type of the raw material and the target food product said composition may comprise said enzymes in various amounts taking into account their activity.

The enzymes suggested for use herein are used in combination due to the synergism of their action. The synergetic action mechanism of cellulases is that enzymes of this group break the polymer molecules of insoluble pentosans contained in the grain hull to soluble high-molecular fragmentary oligosaccharides. Cellobiohydrolase opens up the cellulose fiber by hydrolyzing the cellulose molecules at the non-reducing end of the polysaccharide to form cellobiose, and then endoglucanase hydrolyzes the bonds in the cellulose molecule in a random manner producing a set of poly- and oligomeric fragments of different lengths. The partial destruction of this fiber allows β-xylanases to hydrolyze arabinoxylanes resulting in the release of the covalently bonded proteins.

Combinations of such enzymes as peroxidases, oxidoreductases, laccases and esterases favor the oxidation and decolorization of grain hull pigments thus providing for a greater whiteness of the milled products and a lighter color of the crump in the baked products made from flour produced using this method. Such enzymes as catalase and phytase acting synergistically with the abovementioned enzymes increase the proper antioxidant activity of the crushed and milled products thus preventing the oxidative deterioration and rancidity of semolina and flour made from grain, pulse and cereal crop grains during storage.

As a result of the partial biochemical destruction of the grain hulls the grain body becomes more permeable for humidity during conditioning, the bonds between the separated hulls and the endosperm are weakened, the endosperm structure loosens faster and the grain acquires elastic-plastic or plastic properties which is generally favorable for grain processing and increases the efficiency of hullers and finishers. The milling of grains treated as above yields naturally whiter flour, i.e. increases the top grade flour output and the overall graded flour output, and improves its dietary value, the gluten content increases due to the entering of starch-containing endosperm peripheral parts into the milled product and the gluten quality is improved. Furthermore, enzymatic hydrolysis of grain hulls reduces the content of heavy metals in the milled products due to the desorption of metal ions linked with non-starch-containing polysaccharides during the solubilization of the hull structure.

The treatment of grain, pulse and cereal crop grains with the present composition before processing to semolina or flour can be combined with conditioning or hydrothermal treatment thus being incorporated into the process routes of factories that process any grains, grit or beans equipped with standard vessels and batchers used in the flour milling industry without additional capital costs or water consumption.

The limit consumption rates of the present composition depend on the type of raw material, its quality and the activity of the constituent enzymes.

Exceeding the top consumption limits leads to excessive hydrolysis of the grain hulls which may cause grain aggregation. Reducing the consumption to below the lower limits affects said technical result slightly but increases the time required for hydrothermal treatment which hinders the target increase in the quality of the final product.

The present composition can be used at mills equipped with expansion vessels which can be used for the preliminary dissolution of the present composition at the conditioning stage.

The present composition is dissolved in the preliminary expansion vessel equipped with a stirrer. After cleaning the product it is delivered to a screw feeder for conveying to hydrothermal treatment or conditioning together with the prepared composition solution at 10-50°C. The screw feeds the uniformly treated raw material with the composition solution to a hopper for tempering.

Furthermore, the present composition can be used at factories not equipped with expansion vessels which can be used for the preliminary dissolution of the present composition.

After cleaning, the treated raw material is delivered to a screw feeder for conveying to hydrothermal treatment or conditioning together with water at 10-50°C and the dry resent composition which is uniformly introduced by a batcher. The screw feeds the treated raw material, water and the present composition to a hopper for tempering, uniformly stirring the materials.

The present composition can be used at any stage of hydrothermal treatment or conditioning if the existing process route of the factory contemplates this treatment in multiple stages, in dry or solvent forms, as described above.

In every embodiment of the present composition the cleaned and pretreated product is then fed to the milling stage.

Examples of grain, pulse and cereal crop grain treatment composition embodiments for use before processing are presented in Table 1:

| Name of Ingredients | Composition Examples, % | | | | | | | | |
|---|---|---|---|---|---|---|---|---|---|
| | 1 | 2* | 3 | 4* | 5* | 6* | 7* | 8 | 9 |
| Cellulase | 30 | 50 | 10 | 40 | 30 | 60 | 50 | 10 | 20 |
| Cellobiohydrolases | 10 | 20 | 10 | 40 | - | - | 10 | 10 | 10 |
| Xylanases | 5 | 20 | 10 | - | 20 | - | 5 | 5 | 10 |
| Catalases | - | - | 10 | 10 | 20 | 30 | - | - | 5 |
| Phytases | - | - | 10 | 10 | - | - | - | - | 5 |
| Peroxidases | 5 | - | 10 | - | 20 | 10 | 20 | 10 | 5 |
| Oxidoreductases | 10 | - | 10 | - | 10 | - | 5 | 10 | 5 |
| Laccases | - | 10 | 10 | - | - | - | 10 | 20 | 5 |
| Esterases | 5 | - | 10 | - | - | - | - | 20 | 5 |
| Antioxidants | 35 | - | 10 | - | - | - | - | 15 | 30 |

| | | | | | | | | | |
|---|---|---|---|---|---|---|---|---|---|
| * Disclosed, but not claimed compositions | | | | | | | | | |

Application examples for Compositions 1, 2 and 4 (Compositions 2 and 4 being disclosed, but not claimed): wheat milling experiments were conducted using a Nagema laboratory mill. The laboratory wheat samples were moistened to 16.5%. The enzyme combinations were dissolved in water and introduced at the hydrothermal treatment stage. The time of moistening was 12 and 18 hours. Milling of three wheat samples treated as described above provided the following final product yield: 73.5%, 79% and 82% depending on enzyme content. The total yield of the reference wheat sample (without enzyme treatment) milled with Nagema was 60.3%.

Application examples for Compositions 1, 2 and 4 (Compositions 2 and 4 being disclosed, but not claimed): industrial milling was on a 50 tpd mill. The grain tempering time was 10 hours for each of the batches. Visual inspection of each batch suggested that grains moistened with the enzymes had one grade lighter colors than those without the enzymes. Moreover, the hulls of the experimental batch grains were more loose and shriveled. After 30 minutes of mill work the whiteness and quality of flour were examined by streams. Based on the examination results it was considered appropriate to change the grade of 2 more flour streams to the top one. As a result, of the 11 flour streams qualified as top grade flour, 8 were permanent throughout milling, compared to 6 for conventional grain without the enzymes. The bran of the test grain batch was cleaner, lighter and coarser compared to that of the reference sample. The overall flour yield of the reference sample was 75.5% and that of the experimental enzyme treated wheat batch was 77.24%. The presence of antioxidant in the composition for popcorn grain treatment prevents the oxidative deterioration of the milled product.

Application examples for Compositions 5 and 7 (disclosed, but not claimed): industrial milling was on a 500 tpd factory. The interest to experimenting with milling at that factory was that the deficiency of good grain the milling batch mainly comprised medium and low grade red-grained wheat of Kazakhstan origin with a large fraction of small, shrunk grain and low grain unit. The main problem with milling this crop was the low yield (45-50%) of top grade flour.

The introduction of the enzyme combination at the conditioning stage during 6-8 h increased the top grade flour yield to 62% while retaining all the flour quality parameters.

Application examples for Compositions 6 and 9 (Composition 6 being disclosed, but not claimed): industrial milling was on a 150 tpd mill. As a result the huller efficiency increased thus reducing the overall weight percentage of hulls fed to milling. Inspection revealed a drastic (natural) increase in flour whiteness for each mill and each stream (by 3 to 18 units) for wheat treated with the enzymes at the moistening stage followed by grain tempering which increased the percentage of top grade flour without compromise in the quality (including whiteness) of 1^{st} grade flour. An antioxidant activity examination of the bread baked from the flour processed as described above proved that the test sample has this figure 5.6 times the one for bread baked from standard flour.

Application examples for Composition 3: experimental milling and rolling or whole oat grain yielded the following results: cleaned oat grit was steamed and moistened to 2.0-2.5% followed by tempering. Then the grit was rolled in smooth roll machines. As a result of grain treatment with the enzyme composition the grit acquired elastic-plastic or plastic properties which generally improved its rolling, reduced the percentage of losses (broken or crumbs) and retained the wholeness of the flakes. The presence of ascorbates as an antioxidant in the grit treatment composition increases its antioxidant activity.

Application examples for Composition 8: the use of the enzymes at the popcorn grain conditioning or hydrothermal treatment stages if favorable not only for the subsequent crushing and polishing operations but also for germ separation and preservation. The germ is bound to the endosperm by the cementing layer having no cell structure and consisting of protein and pentosans. As a result of moistening and the action of the enzyme composition said cementing layer softens and its bond to the endosperm weakens. This treatment may be important if the germs are used for the production of oil. The germs should be separated from the grains as completely as possible, and the endosperm content in the separated product should be as low as possible. After the treatment the germs separate in the form of coarser pieces and contain less endosperm. This technology is of special importance for the production of grit for flakes and sticks because it makes the hulls separate easier during crushing and the endosperm, crush into coarser pieces which are required for flakes. The presence of tocopherol as an antioxidant in the oat grain treatment composition prevents the oxidative deterioration of the final products.

The use of the present composition increases the output of flour or grit mills with a concurrent gain in the quality and dietary value of the milled products.

## Claims

1. Use of a composition comprising a combination of enzyme preparations, said combination of enzyme preparations comprising
a. cellulases, selected from at least cellobiohydrolases;
b. xylanases;
c. oxidoreductases, selected from at least catalases, laccases and peroxidases;
d. esterases, selected from at least phytases; and
e. antioxidants selected from the group consisting of ascorbates, tocopherols, polyphenols, natural vegetable extracts, citric acid or ascorbic acid,
for the hydrothermal treatment of grain, pulse and cereal crop grains before processing.

2. Use according to claim 1, wherein the composition comprising a combination of enzyme preparations is used in dry or solute forms at any stage of hydrothermal treatment.

## Patentansprüche

1. Verwendung einer Zusammensetzung, die eine Kombination von Enzympräparaten enthält, dabei enthält die genannte Kombination von Enzympräparaten
a. Cellulasen, die wenigstens aus Cellobiohydrolasen ausgewählt worden sind;
b. Xylanasen;
c. Oxidoreduktasen, die wenigstens aus Katalasen, Lakkasen und Peroxidasen ausgewählt worden sind;
d. Esterasen, die wenigstens aus Phytasen ausgewählt worden sind; und
e. Antioxidantien, die aus der Gruppe ausgewählt worden sind, die aus Ascorbaten, Tocopherolen, Polyphenolen, natürlichen Pflanzenextrakten, Zitronensäure oder Ascorbinsäure besteht,
zur Wasser-Wärme-Behandlung vom Getreide, von Körnern der Hülsenfrüchte und Getreidekulturen vor deren Verarbeitung.

2. Verwendung nach Anspruch 1, in dem die eine Kombination von Enzympräparaten enthaltende Zusammensetzung in trockener oder gelöster Form auf jeder Phase der Wasser-Wärme-Behandlung benutzt wird.

## Revendications

1. L'utilisation d'une composition comprenant une combinaison de préparations enzymatiques, ladite combinaison de préparations enzymatiques comprenant
a. des cellulases choisies parmi au moins des cellobiohydrolases;
b. des xylanases;
c. des oxydoréductases choisies parmi au moins des catalases, des laccases et des peroxydases;
d. des estérases choisies parmi au moins des phytases; et
e. des antioxydants choisis dans le groupe constitué des ascorbates, des tocophérols, des polyphénols, des extraits naturels de plantes, de l'acide citrique ou de l'acide ascorbique,
pour le traitement hydrothermal du grain, des grains des légumineuses et des céréales avant leur transformation.

2. L'utilisation selon la revendication 1, dans laquelle la composition comprenant la combinaison de préparations enzymatiques est utilisée sous forme sèche ou dissoute à tout stade du traitement hydrothermal.
